Europäisches Patentamt

European Patent Office

Office européen des brevets

(19)

(11) EP 0 991 569 B1

(12) FASCICULE DE BREVET EUROPEEN

(45) Date de publication et mention
de la délivrance du brevet:
**21.08.2002 Bulletin 2002/34**

(21) Numéro de dépôt: **98929498.8**

(22) Date de dépôt: **05.06.1998**

(51) Int Cl.⁷: **B64C 27/467**

(86) Numéro de dépôt international:
**PCT/FR98/01147**

(87) Numéro de publication internationale:
**WO 99/000298 (07.01.1999 Gazette 1999/01)**

(54) **PROFIL DE PALE POUR VOILURE TOURNANTE D'AERONEF ET PALE POUR VOILURE TOURNANTE PRESENTANT UN TEL PROFIL**

DREHFLÜGELBLATT FÜR HUBSCHRAUBER UND DREHFLÜGELBLATT MIT SOLCHEM PROFIL

BLADE PROFILE FOR AIRCRAFT ROTOR AND ROTOR COMPRISING SAME

(84) Etats contractants désignés:
**DE FR GB IT**

(30) Priorité: **25.06.1997 FR 9707915**

(43) Date de publication de la demande:
**12.04.2000 Bulletin 2000/15**

(73) Titulaires:
- **ONERA (Office National d'Etudes et de Recherches Aérospatiales)**
  **92320 Châtillon (FR)**
- **EUROCOPTER**
  **13725 Marignane Cédex (FR)**

(72) Inventeurs:
- **RODDE, Anne, Marie**
  **F-91370 Verrières le Buisson (FR)**
- **RENEAUX, Jo[l**
  **F-91400 Orsay (FR)**
- **THIBERT, Jean, Jacques**
  **F-91370 Verrières le Buisson (FR)**

(74) Mandataire: **Bonnetat, Christian**
**CABINET BONNETAT**
**29, rue de St. Pétersbourg**
**75008 Paris (FR)**

(56) Documents cités:
US-A- 4 412 664      US-A- 4 459 083
US-A- 4 569 633      US-A- 4 830 574

**Description**

La présente invention se rapporte aux profils aérodynamiques utilisés pour la sustentation des aéronefs à voilure tournante et, plus particulièrement, concerne une famille de profils pour pales de rotor d'hélicoptère.

Un tel profil aérodynamique est défini en général par un tableau de cotes. Il présente :

- une épaisseur maximale fixée,
- la position de cette épaisseur maximale est fixée,
- une cambrure relative maximale fixée, et
- la position de cette cambrure maximale est fixée.

A partir d'un profil donné, on peut engendrer, par un procédé quelconque, des profils ayant des épaisseurs relatives différentes pour former une famille de profils. Le procédé utilisé permet ou pas de conserver la position de l'épaisseur maximale, la valeur de la cambrure et sa position.

On sait que, pour les pales d'hélicoptère, la composition des vitesses de rotation du rotor et d'avancement de l'appareil engendre, du côté de la pale avançante (angles d'azimut ψ de la pale compris entre 0° et 180°), des nombres de Mach relatifs variant d'environ 0,3 à l'emplanture à 0,85 en bout de pale, et, du côté de la pale reculante (angles d'azimut ψ de la pale compris entre 180° et 360°), des nombres de Mach beaucoup plus faibles allant de 0,4 en bout de pale à zéro, voire des valeurs négatives (profils attaqués par le bord de fuite) dans le cercle d'inversion près du moyeu du rotor.

De ce fait, la pression cinétique évolue à la fois le long de la pale et en fonction de la position azimutale de celle-ci. Pour équilibrer l'appareil, il est nécessaire que les niveaux de portance Cz, et par conséquent les incidences, soient faibles du côté de la pale avançante et forts du côté de la pale reculante. Les profils constituant la pale rencontrent, au cours d'une rotation de celle-ci, alternativement des vitesses relatives élevées et de faibles incidences, puis des vitesses relatives modérées et de fortes incidences. Les niveaux de vitesse (ou du nombre de Mach) et d'incidences rencontrés par les profils sont fonction de leur position en envergure le long de la pale.

Pour définir des pales ayant des performances élevées, c'est-à-dire permettant de minimiser la puissance nécessaire à la rotation du rotor et/ou permettant à l'appareil de voler avec une enveloppe de vol étendue en termes de portances et de vitesses, il est nécessaire d'utiliser des profils possédant des performances élevées pour toutes ces conditions de fonctionnement. De plus, afin de minimiser les efforts de torsion de la pale et les efforts de commande sur les biellettes de commande du pas, ces profils doivent posséder des coefficients de moment de tangage très faibles dans tout leur domaine de fonctionnement. Enfin, pour des raisons structurales, il est intéressant de construire des pales dont l'épaisseur évolue selon l'envergure avec des épaisseurs plus importantes du côté de l'emplanture et plus faibles en extrémité.

Définir une pale d'hélicoptère ayant des performances élevées nécessite donc de disposer d'une famille de profils, chaque profil ayant des caractéristiques géométriques et aérodynamiques bien adaptées aux conditions de fonctionnement rencontrées selon sa position en envergure le long de la pale. Cette famille de profils doit également être homogène, c'est-à-dire que tous les profils doivent avoir des niveaux de performances voisins sinon les performances de la pale seront limitées par les performances des profils les moins bons.

On connaît différents profils ou familles de profils, en particulier par les brevets US-3 728 045 de Balch, 4 142 837 de De Simone, 4 314 795 de Dadone, 4 569 633 de Flemming, 4 744 728 de Ledciner et le brevet EP-0 517 467 de Nakadate. Dans les brevets décrivant des familles de profils, ceux-ci sont engendrés à partir d'un profil de base, en utilisant deux procédés différents :

- le premier procédé consiste à définir les profils à l'aide d'une loi de cambrure ou squelette unique et d'une loi d'épaisseur rapportée à l'épaisseur relative maximale. Cette technique est décrite dans le rapport : "Theory of wing sections" de H. Abbot et de E. Von Doenhoff publié par Mc Graw-Hill en 1949. L'on obtient des profils d'épaisseurs différentes en appliquant un coefficient multiplicateur à ladite loi d'épaisseur qui est donc la même pour tous les profils ;
- un second procédé consiste, à partir d'un profil de base dont les ordonnées de l'extrados et de l'intrados sont définies par un tableau de valeurs, à définir les autres profils en appliquant un coefficient multiplicateur à ces ordonnées, ce coefficient multiplicateur pouvant éventuellement être différent pour l'extrados et pour l'intrados.

Ainsi, dans les brevets de Balch et de De Simone, des profils sont définis qui ont une épaisseur relative voisine de 10% et ne permettent pas de définir une pale à profil évolutif ayant des performances adaptées selon sa position en envergure.

Le brevet de Dadone présente une famille de profils obtenue selon le second procédé.

Le brevet de Flemming présente une famille de profils qui peut être engendrée par l'un ou l'autre des deux procédés.

Le brevet de Ledciner et le brevet de Nakadate présentent des familles de profils toutes deux engendrées à partir du second procédé.

Les familles de profils telles que celles cités précédemment ne permettent toutefois pas d'obtenir des profils ayant des caractéristiques géométriques adaptées en fonction de l'épaisseur relative, c'est-à-dire d'obtenir des profils ayant tous des performances élevées et par conséquent des pales à hautes performances. Ainsi, pour les familles décrites précédemment, la position de la cambrure maximale et la valeur de la cambrure maximale ne varient pas ou varient de manière non optimale avec l'épaisseur relative. De même, l'épaisseur relative entre 20% de la corde et la position de l'épaisseur maximale n'évolue pas ou n'évolue pas de façon optimale avec l'épaisseur relative. Ces familles de profils ne permettent donc pas d'obtenir des pales à performances élevées, même si le profil de base de la famille possède de bonnes performances parce que les performances de la pale sont limitées par les performances des profils dérivés qui ne sont pas adaptées.

La famille de profils décrite dans les brevets FR-2 463 054 et FR-2 485 470 possède, par ailleurs, certaines caractéristiques, notamment pour ce qui est de l'évolution de l'épaisseur entre 20% de la corde et la position de l'épaisseur maximale, qui confèrent à cette famille des performances élevées aux faibles niveaux de portance et forts nombres de Mach. En revanche, les cambrures ne possèdent pas les caractéristiques qui permettent d'accroître notablement les niveaux de Cz max sans diminuer les performances en transsonique.

La présente invention a pour but d'éviter ces inconvénients.

A cet effet, le profil de pale pour voilure tournante d'aéronef, comportant, entre un bord d'attaque et un bord de fuite, un extrados et un intrados dont le lieu géométrique des points équidistants de ceux-ci définit la cambrure, est remarquable, selon l'invention, en ce que la valeur du rapport de la cambrure maximale à l'épaisseur maximale évolue linéairement avec l'épaisseur relative du profil et est comprise entre 0,13 et 0,19 pour une épaisseur relative de 7% de la corde et est comprise entre 0,18 et 0,24 pour une épaisseur relative de 15% de la corde.

Avantageusement, la loi d'évolution du rapport de la valeur de la cambrure maximale à l'épaisseur maximale en fonction de l'épaisseur relative est représentée par la formule :

$$\frac{(c/C)_{max}}{(e/C)_{max}} = a_3 + b_3\,(e/C)_{max}$$

les valeurs des coefficients $a_3$ et $b_3$ étant égales à :

$$a_3 = 0,1177$$

$$b_3 = 0,6114.$$

De plus, la position de la cambrure maximale évolue linéairement avec l'épaisseur relative du profil et est comprise entre 14% et 16% de la corde pour une épaisseur relative de 7% et entre 27% et 29% de la corde pour une épaisseur relative de 15%.

De préférence, la loi d'évolution de la position de la cambrure maximale est représentée par la formule :

$$\frac{Xc_{max}}{C} = a_2 + b_2\,(e/C)_{max}$$

les valeurs des coefficients $a_2$ et $b_2$ étant égales à :

$$a_2 = 0,0321$$

$$b_2 = 1,6499.$$

Comme on le verra plus en détail par la suite, ces caractéristiques particulières de la cambrure et de sa position en fonction de l'épaisseur relative permettent pour tous les profils de la famille selon l'invention de posséder des performances en portance maximale bien adaptées à leur position sur la pale.

En outre, le rapport entre les épaisseurs à 20% de la corde et l'épaisseur maximale varie linéairement avec l'épaisseur relative et est compris entre 0,957 et 0,966 pour une épaisseur relative de 7% et compris entre 0,938 et 0,947 pour une épaisseur relative de 15%.

Avantageusement, la loi d'évolution de ce rapport est représentée par la formule :

$$\frac{(e/C) \; X/C = 20\%}{(e/C)_{max}} = a_1 + b_1 \; (e/C)_{max}$$

les valeurs des coefficients $a_1$ et $b_1$ étant égales à :

$$a_1 = 0,9779$$

$$b_1 = -0,2305.$$

De plus, le profil de pale selon l'invention est de préférence remarquable par une position d'épaisseur relative maximale comprise entre 31% et 35% de la corde.

Les figures du dessin annexé feront bien comprendre comment l'invention peut être réalisée.

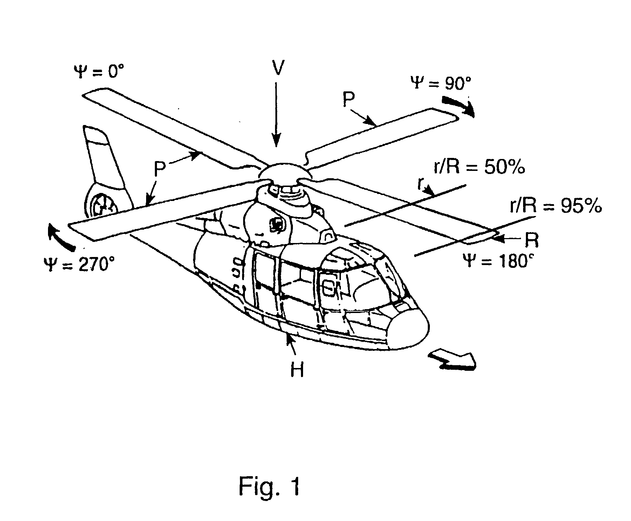

La figure 1 est une vue schématique d'un hélicoptère à voilure tournante à quatre pales.

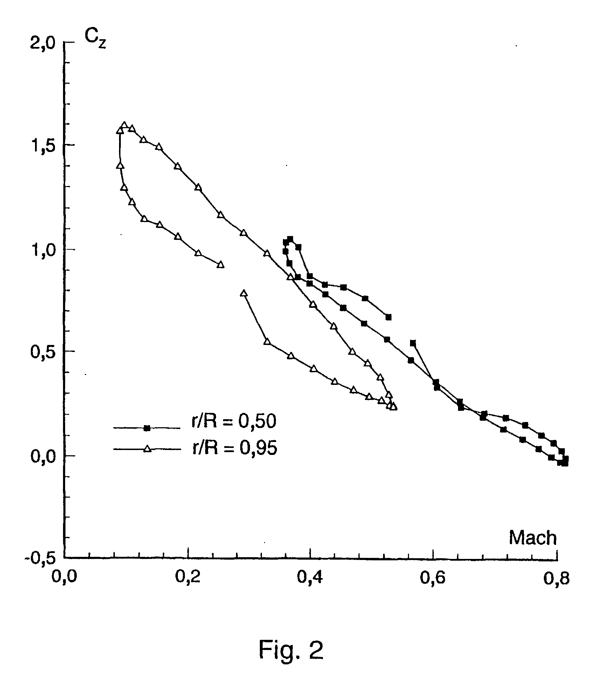

La figure 2 est un diagramme illustrant les variations de nombre de Mach et de portance rencontrées par deux profils situés à 50% et à 95% de l'envergure d'une pale de l'hélicoptère de la figure 1 en vol d'avancement.

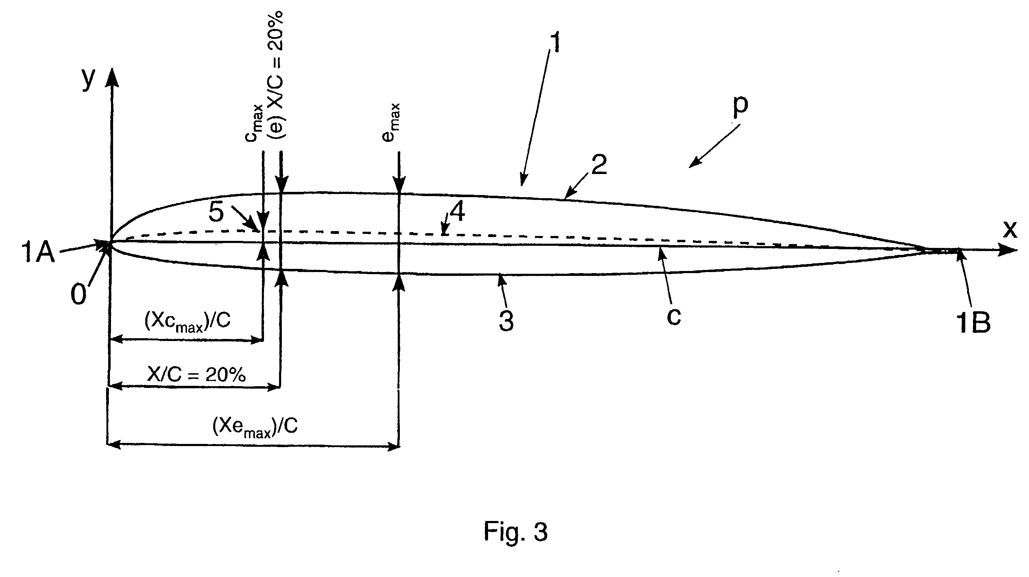

La figure 3 est une vue générale d'un profil de pale de la famille selon l'invention.

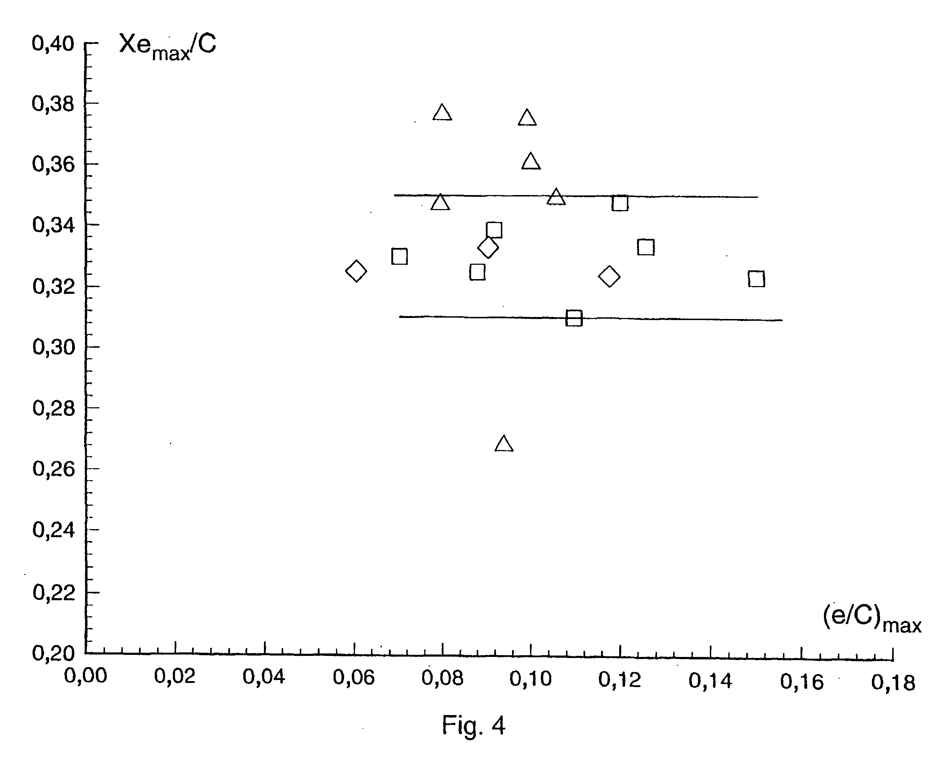

La figure 4 est un diagramme montrant les positions de l'épaisseur maximale des profils de pale de la famille selon l'invention et d'autres profils de l'art antérieur, en fonction de l'épaisseur relative maximale.

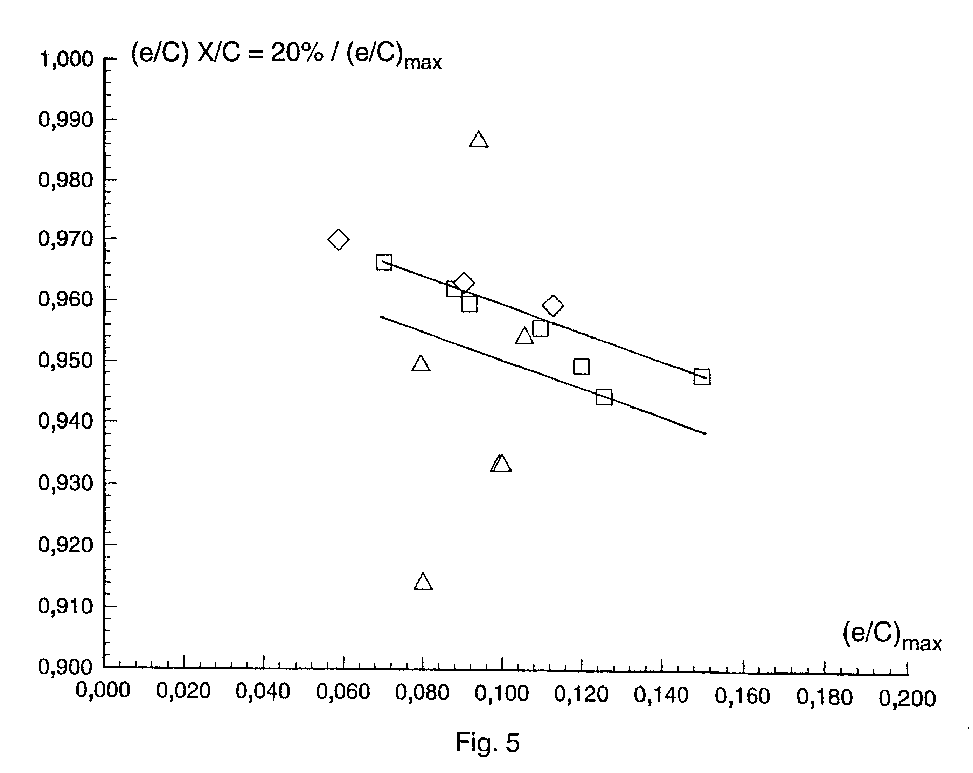

La figure 5 est un diagramme montrant l'évolution du rapport de l'épaisseur des profils de pale de la famille selon l'invention à 20% de la corde à l'épaisseur maximale en fonction de l'épaisseur relative et l'évolution de ce même rapport pour des familles de profils selon l'art antérieur.

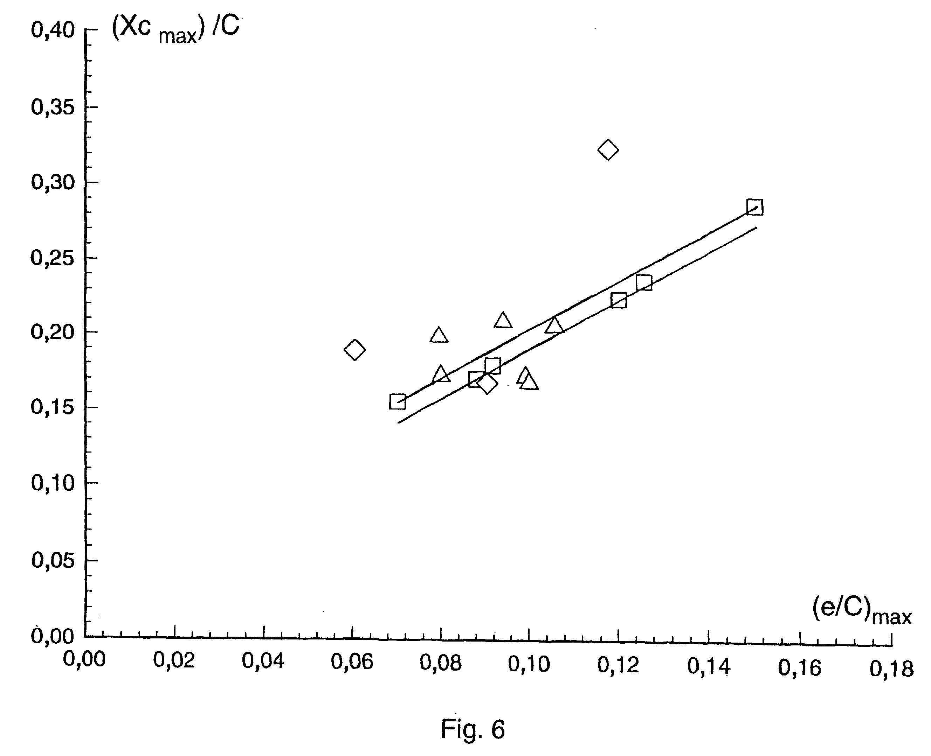

La figure 6 est un diagramme montrant l'évolution de la position de la cambrure maximale exprimée en pourcentage de corde en fonction de l'épaisseur relative des profils de pale de la famille selon l'invention et l'évolution de cette même position pour des familles de profils selon l'art antérieur.

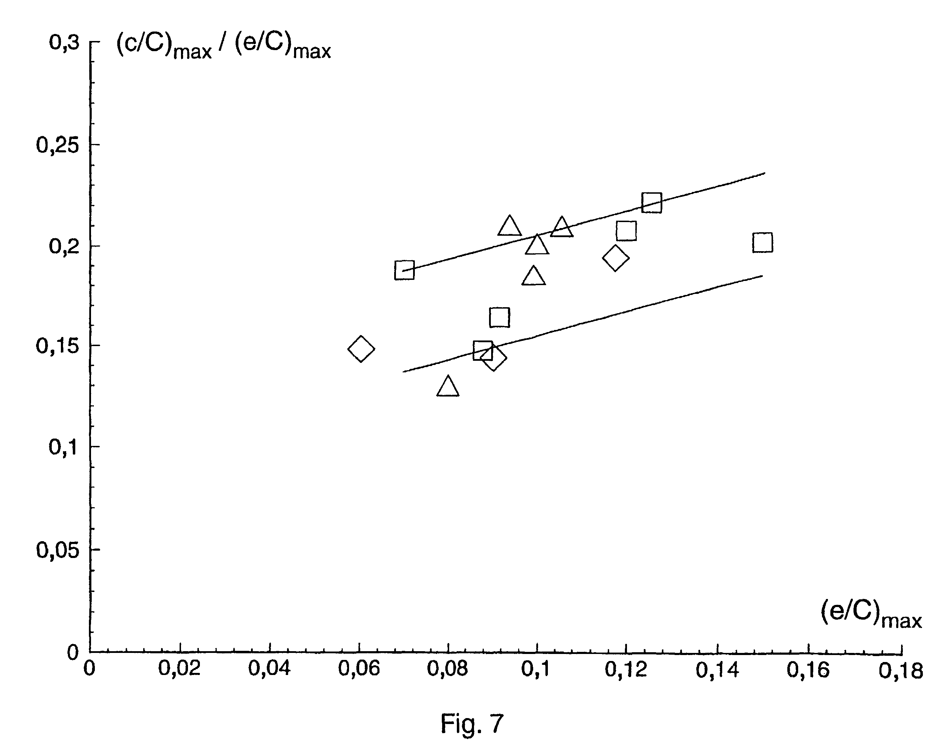

La figure 7 est un diagramme montrant l'évolution du rapport de la valeur de la cambrure maximale à l'épaisseur relative maximale des profils de pale de la famille selon l'invention en fonction de l'épaisseur relative et les évolutions de ce rapport pour des familles de profils selon l'art antérieur.

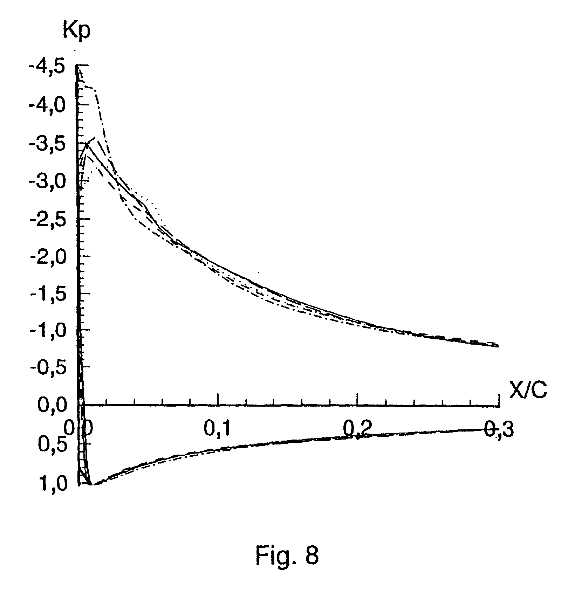

La figure 8 est un diagramme sur lequel est tracée, pour un profil de 8% d'épaisseur relative de la famille selon l'invention et des profils de même épaisseur relative de l'art antérieur, l'évolution des coefficients de pression au voisinage du bord d'attaque pour un nombre de Mach de 0,4 et un niveau de Cz de 1.

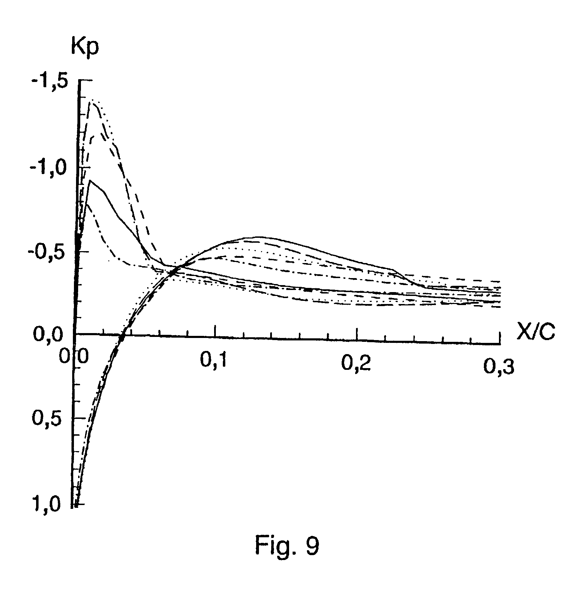

La figure 9 est un diagramme sur lequel est tracée, pour un profil de 8% d'épaisseur relative de la famille selon l'invention et des profils de même épaisseur relative de l'art antérieur, l'évolution des coefficients de pression au voisinage du bord d'attaque pour un nombre de Mach de 0,75 et un Cz nul.

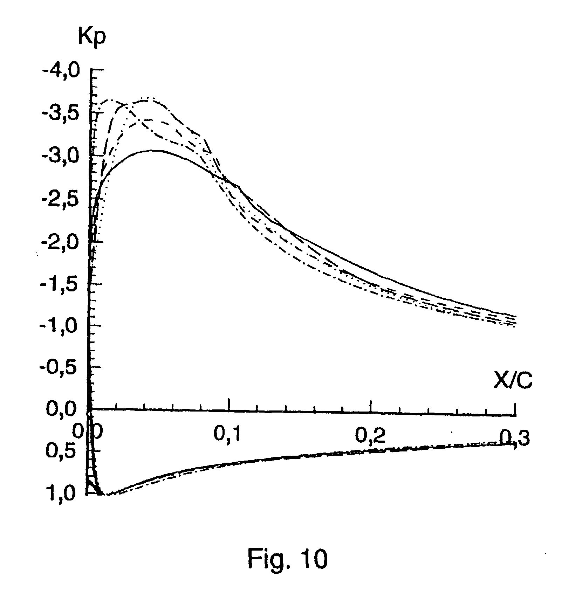

La figure 10 est un diagramme sur lequel est tracée, pour un profil de 12% d'épaisseur relative de la famille selon l'invention et des profils de même épaisseur relative de l'art antérieur, l'évolution des coefficients de pression au voisinage du bord d'attaque pour un nombre de Mach de 0,4 et un Cz de 1,25.

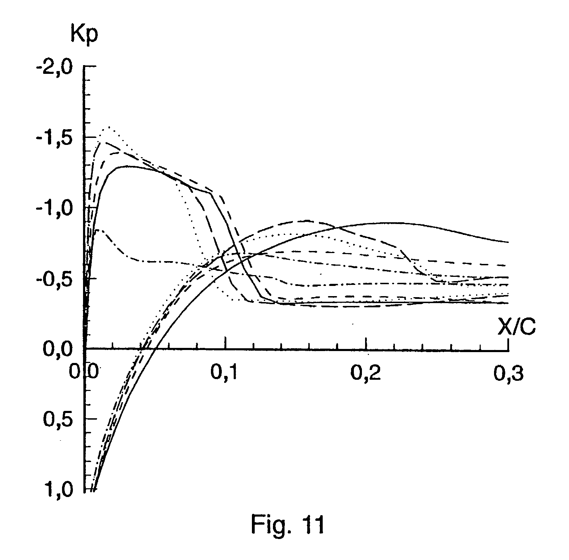

La figure 11 est un diagramme sur lequel est tracée, pour un profil de 12% d'épaisseur relative de la famille selon l'invention et des profils de même épaisseur relative de l'art antérieur, l'évolution des coefficients de pression au voisinage du bord d'attaque pour un nombre de Mach de 0,75 et un Cz nul.

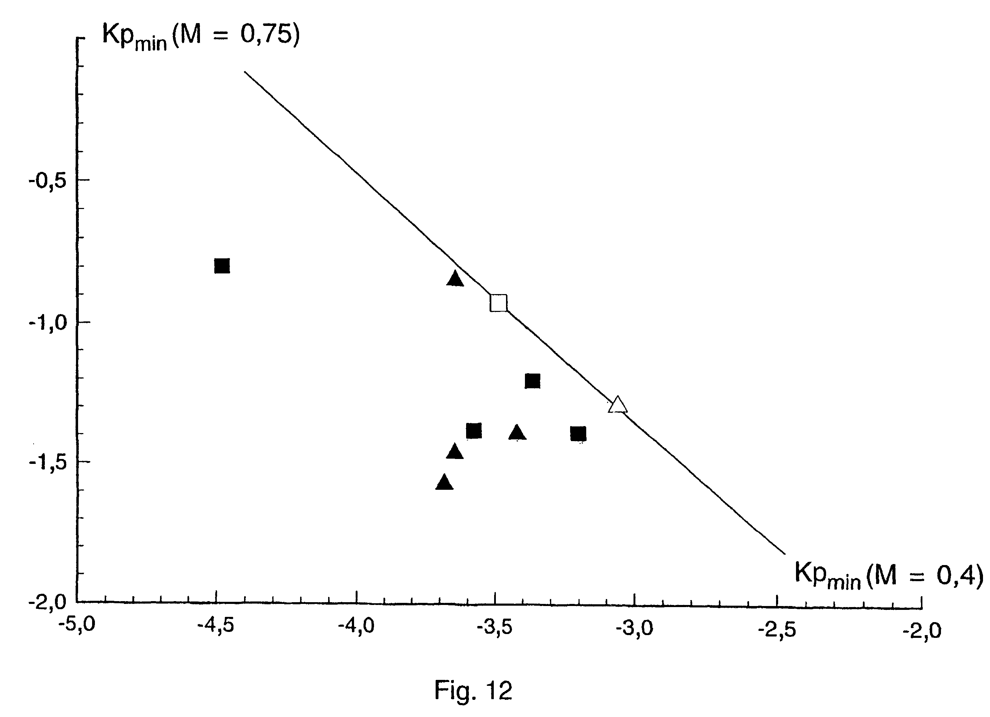

La figure 12 est un diagramme sur lequel sont tracées, pour des profils de 8% et 12% d'épaisseur relative de la famille selon l'invention et pour des profils de même épaisseur relative selon l'art antérieur, les valeurs du coefficient de pression minimal à l'intrados pour un nombre de Mach de 0,75 et un Cz nul en fonction de la valeur du coefficient de pression minimal à l'extrados pour un nombre de Mach de 0,4 et un Cz égal à 1 pour les profils de 8% d'épaisseur relative et un Cz égal à 1,25 pour les profils de 12% d'épaisseur relative.

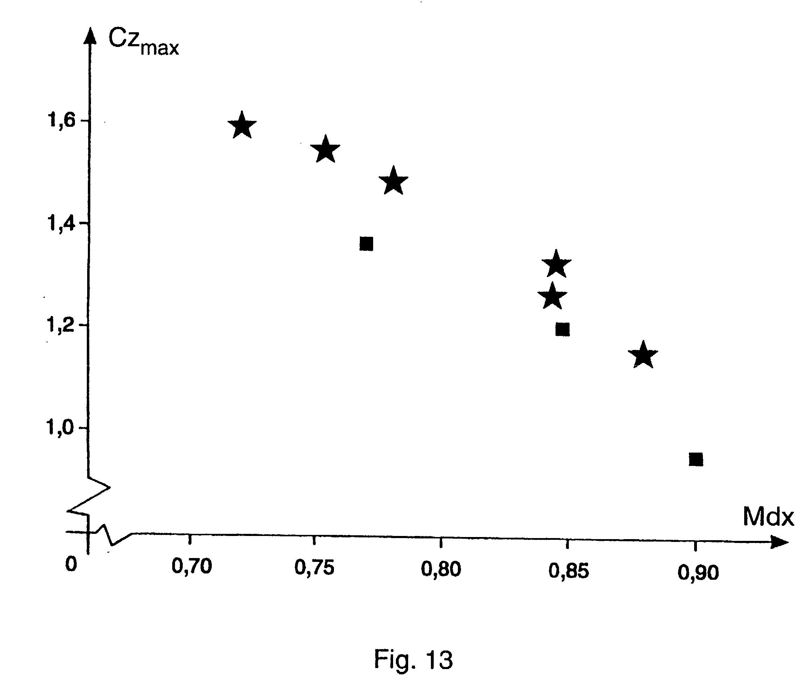

La figure 13 est un diagramme des performances mesurées en soufflerie montrant les coefficients de portance maximale ($Cz_{max}$) au nombre de Mach de 0,4 et les nombres de Mach de divergence de traînée (Mdx) à Cz = 0, pour des profils d'une famille de l'art antérieur et de la famille selon l'invention.

La figure 1 montre un hélicoptère H présentant une voilure tournante V, entraînée par un rotor, à quatre pales P, en vol d'avancement, avec les différents angles d'azimut $\psi$ , tels que $\psi = 90°$ pour la pale avançante et $\psi = 270°$ pour la pale reculante, par exemple. On considère de plus, sur la figure 1, deux sections de pale telles que r/R = 50% et r/R = 95%, respectivement, avec R l'envergure de 1a pale et r la position de la section considérée.

La figure 2 illustre bien le fait que les profils de pale d'hélicoptère rencontrent, selon leur position en envergure sur la pale, des conditions de fonctionnement en nombre de Mach et coefficient de portance différentes et qu'il est avantageux, pour définir une pale à performances élevées, d'utiliser des profils bien adaptés à ces conditions de fonctionnement. Cela est illustré, sur la figure 2, dans le cas d'un hélicoptère volant à une vitesse d'avance modérée pour deux sections de pale situées à 50% et 95% de l'envergure maximale de la pale.

Comme montré sur la figure 3, un profil 1 de pale P selon l'invention est composé d'une partie supérieure 2 appelée extrados et d'une partie inférieure 3 appelée intrados réunis, d'une part, au bord d'attaque 1A et, d'autre part, au bord de fuite 1B. Pour faciliter la description, le profil 1 de la figure 3 est rapporté à un système d'axes Ox, Oy, orthogonaux entre eux au point 0, lequel est confondu avec le bord d'attaque IA.

L'axe Ox, qui passe par le point du bord de fuite 1B, est de plus confondu avec la corde C du profil.

Le système d'axes Ox, Oy, dont les sens positifs sont indiqués par les flèches sur la figure 3, sert de référence à des coordonnées réduites, c'est-à-dire à des abscisses X et à des ordonnées Y, rapportées respectivement à la longueur C de la corde du profil. Par ailleurs, il est notamment considéré, pour déterminer le contour extérieur d'un profil, une ligne moyenne 4 ou squelette, passant par le point 0 et le point 1B, laquelle représente le lieu géométrique des points équidistants des lignes 2 et 3.

L'évolution de l'épaisseur du profil compris entre les lignes 2 et 3 est caractérisée par l'abscisse X du point où l'épaisseur est maximale, abscisse repérée le long de la corde C du profil et exprimée en valeur relative par rapport à la longueur de la corde (soit $(Xe_{max})/C$). Un profil de pale selon l'invention est également caractérisé par la valeur de l'épaisseur relative à une abscisse relative X/C = 20%, cette épaisseur pouvant être normalisée par la longueur de la corde.

Un profil de pale selon l'invention peut être également caractérisé par la forme de sa loi de cambrure 4, lieu des points situés à égales distances des lignes 2 et 3. Cette ligne 4 possède une ordonnée maximale en un point 5. La position en abscisse, relativement à la corde, du point 5 étant appelée position de la cambrure maximale $(Xc_{max})/$C et la valeur de l'ordonnée du point 5, relativement à la corde, étant appelée valeur de la cambrure maximale.

Comme le montre la figure 4 pour la famille de profils de pale selon l'invention montrés par des carrés, la position de l'épaisseur maximale $(Xe_{max})/C$ en fonction de l'épaisseur relative maximale $(e/C)_{max}$ est située de préférence 31% et 35% de la corde et est donc située plus en amont que pour des familles de profils de l'art antérieur montrés par des triangles et des losanges.

Comme le montre la figure 5, le rapport de l'épaisseur à 20% de la corde à l'épaisseur maximale décroît linéairement lorsque l'épaisseur relative augmente pour des profils de l'invention marqués par des carrés alors que, pour les familles de profils antérieurs marqués par des triangles ou des losanges, ce rapport est constant ou augmente du fait du procédé utilisé pour générer ces familles. De préférence, on choisira, pour un profil de 7% d'épaisseur relative, une valeur de ce rapport comprise entre 0,957 et 0,966 et, pour un profil de 15% d'épaisseur relative, une valeur comprise entre 0,938 et 0,947. La loi d'évolution de ce rapport peut être représentée avantageusement par la formule :

$$\frac{(e/C)\ X/C = 20\%}{(e/C)_{max}} = a_1 + b_1\ (e/C)_{max}$$

les valeurs des coefficients $a_1$ et $b_1$ étant égales à :

$$a_1 = 0,9779$$

$$b_1 = -0,2305.$$

L'évolution du rapport précédent avec l'épaisseur relative permet aux profils de pale de la famille selon l'invention d'avoir de très bonnes performances en pale avançante pour toute la gamme d'épaisseurs relatives maximales comprises entre 7% et 15%. En effet, ces caractéristiques particulières limitent l'intensité des gradients de vitesse à l'extrados et à l'intrados et réduisent les intensités des ondes de choc pour les conditions de fonctionnement à faible Cz et fort nombre de Mach. De même, la position plus avancée de l'épaisseur maximale de la famille selon l'invention permet de diminuer l'intensité de la recompression à l'extrados sur la partie arrière des profils et, par conséquent, retarde l'apparition des décollements de la couche limite pour les conditions de fonctionnement en pale reculante, c'est-à-dire à faible nombre de Mach et fort Cz.

Comme le montre la figure 6 pour la famille de profils de pale selon l'invention (notés par des carrés), la position de la cambrure maximale évolue linéairement avec l'épaisseur relative alors que cette même position est constante pour les familles de l'art antérieur notées par des triangles ou losanges du fait du procédé utilisé pour générer ces familles. De préférence, on choisira, pour un profil d'épaisseur relative égale à 7%, une valeur de la position de la cambrure maximale comprise entre 14% et 16% de la corde et, pour un profil de 15% d'épaisseur relative, une position comprise entre 27% et 29% de la corde.

Cette loi d'évolution de la position de la cambrure maximale peut être représentée avantageusement par la formule :

$$\frac{Xc_{max}}{C} = a_2 + b_2 \, (e/C)_{max}$$

les valeurs des coefficients $a_2$ et $b_2$ étant égales à :

$$a_2 = 0{,}0321$$

$$b_2 = 1{,}6499.$$

Comme le montre la figure 7 pour la famille de profils de pale selon l'invention (carrés), la valeur du rapport de la cambrure maximale à l'épaisseur maximale $(c/C)_{max}/(e/C)_{max}$ évolue linéairement avec l'épaisseur relative $(e/C)_{max}$ alors qu'elle est constante pour les familles de profils de l'art antérieur. De préférence, on choisira, pour un profil de 7% de la famille selon l'invention, une valeur de ce rapport comprise entre 0,13 et 0,19 et, pour un profil de 15% d'épaisseur relative, une valeur comprise entre 0,18 et 0,24. La loi d'évolution du rapport de la valeur de la cambrure maximale à l'épaisseur maximale en fonction de l'épaisseur relative peut être représentée avantageusement par la formule :

$$\frac{(c/C)_{max}}{(e/C)_{max}} = a_3 + b_3 \, (e/C)_{max}$$

les valeurs des coefficients $a_3$ et $b_3$ étant égales à :

$$a_3 = 0{,}1177$$

$$b_3 = 0{,}6114.$$

Ces caractéristiques particulières de la cambrure et de sa position en fonction de l'épaisseur relative permettent pour tous les profils de la famille selon l'invention de posséder des performances en portance maximale bien adaptées à leur position sur la pale.

Ainsi, pour les profils minces situés sur la partie externe de la pale, les cambrures sont modérées et la position de 1a cambrure maximale est avancée, ce qui permet de limiter les survitesses de bord d'attaque à fort Cz et de retarder l'apparition des décollements tout en évitant, pour le fonctionnement à faible portance, l'apparition de survitesses élevées à l'intrados au voisinage du bord d'attaque et donc d'ondes de choc.

Sur la figure 8, on a tracé l'évolution de la survitesse de bord d'attaque exprimée en valeur du coefficient de pression Kp de différents profils de 8% d'épaisseur relative pour un nombre de Mach de 0,4 et un coefficient de portance de 1, conditions typiques de fonctionnement en pale reculante pour ces profils et, sur la figure 9, les mêmes évolutions pour un nombre de Mach de 0,75 et un coefficient de portance nulle, conditions typiques de fonctionnement en pale avançante. Ces répartitions de pression ont été calculées avec une méthode de calcul Euler prenant en compte les effets de la viscosité avec les cotes des profils obtenues à partir des documents précédemment cités.

L'on voit bien, sur ces figures, que le profil de la famille selon l'invention, en traits pleins, permet d'obtenir de bonnes performances à la fois en pale avançante et en pale reculante. Ainsi, par rapport aux profils de l'art antérieur en traits pointillés, le profil selon l'invention possède un niveau de survitesse comparable à faible nombre de Mach et fort Cz et aura donc un Cz maximum voisin car les lois de recompression après la survitesse sont voisines, mais il possédera un niveau de traînée plus faible et un nombre de Mach de divergence de traînée plus élevé que les profils cités précédemment car le niveau de survitesse est plus faible que celui des autres profils à l'intrados à nombre de Mach élevé et faible Cz. Par rapport au profil en traits mixtes de l'art antérieur, le profil selon l'invention possède un niveau de survitesse nettement moins élevé à M = 0,4 et aura donc un niveau de portance maximale bien plus élevé.

Sur la figure 10, on a tracé les niveaux de survitesse extrados au voisinage du bord d'attaque pour un profil de 12% de la famille selon l'invention et d'autres profils selon l'art antérieur pour des conditions typiques de fonctionnement en pale reculante M = 0,4 et Cz = 1,25 et, sur la figure 11, on a tracé, pour ces mêmes profils, les niveaux de survitesse au voisinage du bord d'attaque pour des conditions typiques de fonctionnement en pale avançante M = 0,75 et Cz - 0.

La figure 10 montre bien que le profil de la famille selon l'invention, en traits pleins, a un niveau de survitesse bien plus faible que les autres profils, en traits pointillés, et par conséquent aura le niveau de portance maximale le plus élevé permettant ainsi à la pale de fonctionner correctement pour une enveloppe de vol plus étendue. Ces excellentes performances aux basses vitesses sont obtenues conjointement avec des performances élevées en pale avançante comme le montre la figure 11, car le profil de la famille selon l'invention, en traits pleins, possède des niveaux de survitesse intrados à faible Cz et nombre de Mach élevé du même ordre de grandeur, voire inférieurs à ceux des autres profils, en traits pointillés.

Les figures précédentes montrent bien que la famille de profils selon l'invention réalise un excellent compromis entre les exigences de fonctionnement en pale avançante et en pale reculante et cela quelle que soit l'épaisseur relative, c'est-à-dire la position en envergure du profil considéré. Cela est mis en évidence sur la figure 12 où ce compromis est traduit par un diagramme sur lequel on a porté en ordonnée le niveau de survitesse intrados ($Kp_{min}$) à Mach 0,75 et Cz = 0 (fonctionnement en pale avançante) et en abscisse le niveau de survitesse extrados ($Kp_{min}$) à Mach 0,4 et Cz = 1 pour le profil de 8% (carré blanc) et Cz = 1,25 pour le profil de 12% (triangle blanc) d'épaisseur relative selon l'invention (fonctionnement en pale reculante) et les profils de même épaisseur relative de l'art antérieur (carrés et triangles noirs). On voit que tous les profils de l'art antérieur sont situés à gauche de la ligne joignant les points représentatifs des profils de 8 et 12% de la famille selon l'invention traduisant ainsi le fait que la famille selon l'invention possède bien des performances supérieures dans tout le domaine de fonctionnement des profils.

De plus, la figure 13 est une figure montrant des gains de performances obtenus avec 1a famille selon l'invention par rapport à la famille décrite dans les brevets français 2 463 054 et 2 485 470.

Les profils selon l'invention (étoiles) et les profils antérieurs (carrés) ont été testés dans la même soufflerie et aux mêmes nombres de Reynolds sur des maquettes de même dimension. Ces performances mesurées sont donc tout à fait comparables. L'on voit bien que les caractéristiques particulières de la famille selon l'invention permettent des gains significatifs par rapport à la famille antérieure. Ainsi, pour un même nombre de Mach de divergence de traînée, la famille selon l'invention permet des gains de portance maximale à M = 0,4 de l'ordre de 0,15 ou à un même niveau de portance maximale des gains en nombre de Mach de divergence de traînée à portance nulle de 0,04. L'utilisation de cette famille de profils permet donc d'accroître les performances des pales du rotor et par conséquent celles de l'appareil.

La famille de profils de pale de l'invention permet donc, par rapport aux profils connus, de définir des pales permettant de fonctionner à des vitesses de vol plus élevées avec des puissances réduites sans risquer le décrochage en pale reculante. Cette nouvelle famille permet également un fonctionnement avec des vitesses de rotation plus faibles pour diminuer le bruit car les niveaux de portance maximale de l'ensemble des profils sont augmentés.

L'objet de la présente invention concerne ainsi une famille de profils d'épaisseur relative maximale variant de 7 à 15% de la corde, les différentes caractéristiques particulières de ladite famille de profils conférant à tous les profils des performances élevées à la fois aux faibles niveaux de portance et aux nombres de Mach élevés et aux faibles nombres de Mach et aux portances élevées. Ces différentes caractéristiques particulières de la famille de profils selon l'invention permettent de définir des pales ayant des performances élevées pour des conditions de fonctionnement très étendues tout en conservant de très faibles niveaux de moment de tangage en pale avançante réduisant ainsi la torsion de la pale et les efforts sur les biellettes de commande de pas. Ces très faibles niveaux de moment de tangage sont obtenus sans avoir recours à des artifices, tels que des braquages de volets de bord de fuite ou des formes particulières du profil à cet endroit, qui augmentent la traînée et réduisent la portance maximale.

Pour pouvoir définir et engendrer facilement des profils de la famille selon l'invention, on peut avantageusement utiliser les cotes fournies dans les tables ci-après. Ces cotes décrivent, pour une longueur de corde égale à l'unité, les évolutions de l'intrados (abscisse $X_{int}$, ordonnée $Y_{int}$) et de l'extrados (abscisse $X_{ext}$, ordonnée $Y_{ext}$) de divers profils de la famille selon l'invention.

La table 1 donne ces cotes pour un profil de la famille selon l'invention possédant une épaisseur relative de 15%.

La table 2 donne les cotes d'un profil de la famille selon l'invention possédant une épaisseur relative de 13%.

La table 3 donne les cotes d'un profil de la famille selon l'invention possédant une épaisseur relative de 12%.

Les tables 4 et 5 donnent les cotes de deux profils de la famille selon l'invention possédant une épaisseur relative de 9%. Le premier profil possède une cambrure maximale légèrement plus importante que le second profil, ce qui lui confère une portance maximale légèrement supérieure et peut donc être utilisé pour des positions plus internes sur la pale.

La table 6 donne les cotes d'un profil de la famille selon l'invention possédant une épaisseur relative de 7%.

L'obtention de profils de la famille selon l'invention pour d'autres épaisseurs relatives s'obtient avantageusement par interpolation à partir des cotes des profils donnés dans les tables précédentes. Ainsi, pour obtenir les ordonnées d'un profil de 8% d'épaisseur relative, on prendra la demi-somme des ordonnées des profils de 7 et 9% à la même abscisse. Cette technique d'interpolation permet de conserver pour tous les profils les caractéristiques particulières de la famille selon l'invention.

Tous les profils de la famille ainsi définie possèdent, en plus des performances élevées dans tous les domaines de fonctionnement, des coefficients de moment de tangage à faible Cz extrêmement faibles et cela sans avoir à utiliser des volets de bord de fuite qui réduisent les portances maximales.

Pour engendrer un profil possédant des moments de tangage plus élevés (cabreur), pour des applications particulières, l'on pourra également utiliser les caractéristiques particulières de la famille selon l'invention. Ainsi, à titre d'exemple, la table 7 donne les cotes d'un profil de 11% d'épaisseur relative possédant un coefficient de moment de tangage cabreur de +0,05. Les caractéristiques particulières de la famille de profils selon l'invention confèrent à ce profil de bonnes performances à faible nombre de Mach et Cz élevés malgré le coefficient de moment de tangage cabreur. L'on pourra avantageusement engendrer d'autres profils d'épaisseurs relatives comprises entre 9% et 13% et possédant des coefficients de moment de tangage voisins en appliquant un coefficient de proportionnalité aux ordonnées des cotes de la table 7. Ainsi, pour un profil de 9% d'épaisseur relative, on appliquera un coefficient de 9/11 aux ordonnées des cotes de la table 7 et, pour un profil de 13%, on appliquera un coefficient égal à 13/11 aux ordonnées des cotes de la table 7.

En résumé, et pour synthétiser les concepts précédents décrits, il apparaît que, pour augmenter le coefficient de portance maximale d'un profil, il faut augmenter l'épaisseur relative et la cambrure de celui-ci, mais la position de la cambrure maximale et sa valeur doivent être ajustées en fonction de l'épaisseur relative, c'est-à-dire de la position du profil sur la pale. Ainsi, pour des sections voisines de l'emplanture et jusqu'à mi-envergure, pour lesquelles les nombres de Mach relatifs sont modérés mais qui doivent posséder de forts coefficients de portance maximale pour éviter le décrochage en pale reculante, on choisira des profils de 12 à 15% d'épaisseur relative avec des positions de cambrure maximale au-delà de 20% de la corde et des valeurs de cambrure maximale supérieures à 2,3% de la corde. En revanche, pour des profils situés entre la mi-envergure et l'extrémité de la pale, pour lesquels les nombres de Mach relatifs sont plus élevés et les niveaux de portance plus faibles, on choisira des profils ayant des épaisseurs relatives variant de 7 à 12% avec des positions de cambrure maximale situées avant 20% de la corde et des valeurs de cambrure maximale inférieures à 2% de la corde. Ainsi, pour ces profils, l'on obtiendra des performances élevées en pale avançante avec des niveaux de traînée faibles et des valeurs de nombre de Mach de divergence de traînée élevées tout en conservant des performances suffisantes en pale reculante.

De même, pour obtenir de bonnes performances aux nombres de Mach élevés et à faible niveau de portance, il faut des profils ayant des évolutions d'épaisseurs faibles entre 20% de la corde et la position de l'épaisseur maximale de façon à éviter les formations d'ondes de choc intenses à l'extrados et à l'intrados. Cela conduit toutefois à une diminution des performances à faible nombre de Mach et fort Cz car les recompressions obtenues à l'extrados ne sont pas optimales. On aura donc intérêt là encore à ajuster l'évolution de l'épaisseur du profil entre 20% de la corde et la position de l'épaisseur maximale en fonction de l'épaisseur relative du profil, c'est-à-dire de sa position en envergure sur la pale.

Table 1

| Xint | Yint | Xext | Yext |
|---|---|---|---|
| 0.0000000 | 0.0000000 | 0.0000000 | 0.0000000 |
| 0.0005618 | -0.0047861 | 0.0010074 | 0.0070110 |
| 0.0020133 | -0.0086833 | 0.0031804 | 0.0128559 |
| 0.0039999 | -0.0118075 | 0.0064770 | 0.0190511 |
| 0.0062089 | -0.0142795 | 0.0109192 | 0.0255441 |
| 0.0084600 | -0.0162582 | 0.0165578 | 0.0322846 |
| 0.0106796 | -0.0178799 | 0.0234600 | 0.0392114 |
| 0.0128586 | -0.0192464 | 0.0317071 | 0.0462450 |
| 0.0150204 | -0.0204345 | 0.0413858 | 0.0532865 |
| 0.0172062 | -0.0215035 | 0.0525785 | 0.0602213 |
| 0.0194674 | -0.0225005 | 0.0653633 | 0.0669160 |

Table 1   (suite)

| Xint | Yint | Xext | Yext |
|---|---|---|---|
| 0.0218632 | -0.0234613 | 0.0798042 | 0.0732303 |
| 0.0244570 | -0.0244127 | 0.0959330 | 0.0790717 |
| 0.0273161 | -0.0253733 | 0.1137575 | 0.0844065 |
| 0.0305100 | -0.0263540 | 0.1332907 | 0.0891990 |
| 0.0341096 | -0.0273602 | 0.1545426 | 0.0934303 |
| 0.0381862 | -0.0283939 | 0.1775258 | 0.0970679 |
| 0.0428111 | -0.0294538 | 0.2022496 | 0.1000741 |
| 0.0480558 | -0.0305359 | 0.2287162 | 0.1024112 |
| 0.0539920 | -0.0316316 | 0.2569190 | 0.1040441 |
| 0.0606909 | -0.0327283 | 0.2868397 | 0.1049407 |
| 0.0682235 | -0.0338107 | 0.3184458 | 0.1050728 |
| 0.0766588 | -0.0348653 | 0.3516889 | 0.1044157 |
| 0.0860650 | -0.0358817 | 0.3865006 | 0.1029460 |
| 0.0965083 | -0.0368549 | 0.4227889 | 0.1006352 |
| 0.1080535 | -0.0377824 | 0.4604323 | 0.0974324 |
| 0.1207641 | -0.0386632 | 0.4992754 | 0.0932751 |
| 0.1347018 | -0.0394980 | 0.5391286 | 0.0881391 |
| 0.1499256 | -0.0402898 | 0.5797675 | 0.0820418 |
| 0.1664918 | -0.0410424 | 0.6209309 | 0.0750418 |
| 0.1844530 | -0.0417596 | 0.6623179 | 0.0672428 |
| 0.2038574 | -0.0424412 | 0.7035880 | 0.0587975 |
| 0.2247478 | -0.0430810 | 0.7443573 | 0.0499113 |
| 0.2471602 | -0.0436657 | 0.7841966 | 0.0408420 |
| 0.2711227 | -0.0441791 | 0.8226272 | 0.0318993 |
| 0.2966531 | -0.0446070 | 0.8591139 | 0.0234320 |
| 0.3237578 | -0.0449396 | 0.8930389 | 0.0157286 |
| 0.3524293 | -0.0451596 | 0.9236759 | 0.0089118 |
| 0.3826449 | -0.0452234 | 0.9503337 | 0.0035505 |
| 0.4143623 | -0.0450682 | 0.9723281 | 0.0020000 |
| 0.4475175 | -0.0446448 | 0.9884801 | 0.0020000 |
| 0.4820218 | -0.0439432 | 0.9977057 | 0.0020000 |
| 0.5177580 | -0.0429063 | 1.0000000 | 0.0020000 |
| 0.5545756 | -0.0414566 | | |
| 0.5922874 | -0.0395269 | | |
| 0.6306641 | -0.0370422 | | |
| 0.6694330 | -0.0339526 | | |
| 0.7082751 | -0.0302550 | | |
| 0.7468266 | -0.0260106 | | |
| 0.7846834 | -0.0213969 | | |
| 0.8214063 | -0.0167411 | | |
| 0.8564980 | -0.0123661 | | |
| 0.8893883 | -0.0085190 | | |
| 0.9194329 | -0.0053961 | | |
| 0.9459121 | -0.0030839 | | |
| 0.9680430 | -0.0020000 | | |
| 0.9849725 | -0.0020000 | | |
| 0.9957821 | -0.0020000 | | |
| 1.0000000 | -0.0020000 | | |

Table 2

| Xint | Yint | Xext | Yext |
|---|---|---|---|
| 0.0000891 | 0.0027841 | 0.0000891 | 0.0027841 |
| 0.0002172 | 0.0013141 | 0.0001350 | 0.0043218 |
| 0.0015133 | -0.0025465 | 0.0012345 | 0.0092088 |
| 0.0036367 | -0.0055021 | 0.0035931 | 0.0143655 |
| 0.0060472 | -0.0077063 | 0.0070912 | 0.0197190 |
| 0.0084814 | -0.0093849 | 0.0116887 | 0.0252444 |
| 0.0108499 | -0.0107134 | 0.0173949 | 0.0309227 |
| 0.0131472 | -0.0118074 | 0.0242511 | 0.0367252 |
| 0.0154054 | -0.0127431 | 0.0323202 | 0.0426037 |
| 0.0176734 | -0.0135741 | 0.0416752 | 0.0484919 |
| 0.0200086 | -0.0143399 | 0.0523874 | 0.0543151 |
| 0.0224737 | -0.0150704 | 0.0645290 | 0.0599805 |
| 0.0251348 | -0.0157868 | 0.0781676 | 0.0653826 |
| 0.0280602 | -0.0165021 | 0.0933566 | 0.0704258 |
| 0.0313197 | -0.0172241 | 0.1101364 | 0.0750287 |
| 0.0349840 | -0.0179559 | 0.1285397 | 0.0791188 |
| 0.0391235 | -0.0186982 | 0.1485912 | 0.0826372 |
| 0.0438089 | -0.0194501 | 0.1703087 | 0.0855425 |
| 0.0491104 | -0.0202102 | 0.1937041 | 0.0878114 |
| 0.0550983 | -0.0209743 | 0.2187835 | 0.0894425 |
| 0.0618426 | -0.0217369 | 0.2455476 | 0.0904540 |
| 0.0694126 | -0.0224930 | 0.2739908 | 0.0908724 |
| 0.0778767 | -0.0232396 | 0.3040984 | 0.0907184 |
| 0.0873025 | -0.0239777 | 0.3358428 | 0.0900006 |
| 0.0977563 | -0.0247121 | 0.3691793 | 0.0887110 |
| 0.1093032 | -0.0254500 | 0.4040416 | 0.0868221 |
| 0.1220069 | -0.0261993 | 0.4403372 | 0.0842939 |
| 0.1359293 | -0.0269693 | 0.4779434 | 0.0810740 |
| 0.1511296 | -0.0277699 | 0.5167014 | 0.0770917 |
| 0.1676644 | -0.0286097 | 0.5564131 | 0.0722792 |
| 0.1855865 | -0.0294939 | 0.5968396 | 0.0665944 |
| 0.2049444 | -0.0304227 | 0.6377000 | 0.0600373 |
| 0.2257812 | -0.0313878 | 0.6786754 | 0.0526819 |
| 0.2481338 | -0.0323713 | 0.7194122 | 0.0446959 |
| 0.2720310 | -0.0333478 | 0.7595229 | 0.0363436 |
| 0.2974920 | -0.0342855 | 0.7985795 | 0.0279608 |
| 0.3245243 | -0.0351452 | 0.8361021 | 0.0199293 |
| 0.3531218 | -0.0358781 | 0.8715494 | 0.0126615 |
| 0.3832621 | -0.0364293 | 0.9042991 | 0.0065265 |
| 0.4149035 | -0.0367448 | 0.9336395 | 0.0016899 |
| 0.4479821 | -0.0367779 | 0.9587540 | -0.0013452 |
| 0.4824094 | -0.0364939 | 0.9787074 | -0.0019526 |
| 0.5180687 | -0.0358730 | 0.9924748 | -0.0014413 |
| 0.5548126 | -0.0349150 | 0.9993106 | -0.0011316 |
| 0.5924599 | -0.0336388 | 1.0000000 | -0.0011003 |
| 0.6307913 | -0.0320774 | | |
| 0.6695459 | -0.0302750 | | |
| 0.7084165 | -0.0282760 | | |
| 0.7470445 | -0.0261113 | | |

Table 2   (suite)

| Xint | Yint | Xext | Yext |
|---|---|---|---|
| 0.7850155 | -0.0237905 | | |
| 0.8218558 | -0.0213070 | | |
| 0.8570300 | -0.0186551 | | |
| 0.8899292 | -0.0157574 | | |
| 0.9198689 | -0.0124362 | | |
| 0.9461870 | -0.0091919 | | |
| 0.9681802 | -0.0068617 | | |
| 0.9850296 | -0.0057928 | | |
| 0.9957981 | -0.0052912 | | |
| 1.0000000 | -0.0051003 | | |

Table 3

| Xint | Yint | Xext | Yext |
|---|---|---|---|
| 0.0000739 | -0.0013128 | 0.0000739 | -0.0013128 |
| 0.0000966 | -0.0022595 | 0.0001401 | -0.0000894 |
| 0.0005894 | -0.0038727 | 0.0009167 | 0.0040673 |
| 0.0017123 | -0.0062133 | 0.0025764 | 0.0083432 |
| 0.0032959 | -0.0084863 | 0.0051172 | 0.0128506 |
| 0.0051085 | -0.0103179 | 0.0085476 | 0.0175796 |
| 0.0070472 | -0.0118403 | 0.0129012 | 0.0225127 |
| 0.0090840 | -0.0131503 | 0.0182309 | 0.0276268 |
| 0.0112365 | -0.0143169 | 0.0246051 | 0.0328853 |
| 0.0135466 | -0.0153866 | 0.0321044 | 0.0382312 |
| 0.0160688 | -0.0163897 | 0.0408105 | 0.0435950 |
| 0.0188624 | -0.0173500 | 0.0507980 | 0.0489034 |
| 0.0219889 | -0.0182906 | 0.0621416 | 0.0540645 |
| 0.0255132 | -0.0192284 | 0.0749128 | 0.0589699 |
| 0.0295035 | -0.0201697 | 0.0891668 | 0.0635267 |
| 0.0340297 | -0.0211133 | 0.1049426 | 0.0676699 |
| 0.0391620 | -0.0220563 | 0.1222725 | 0.0713490 |
| 0.0449693 | -0.0229985 | 0.1411846 | 0.0745237 |
| 0.0515209 | -0.0239389 | 0.1617031 | 0.0771678 |
| 0.0588862 | -0.0248698 | 0.1838480 | 0.0792709 |
| 0.0671345 | -0.0257807 | 0.2076351 | 0.0808425 |
| 0.0763339 | -0.0266634 | 0.2330754 | 0.0819199 |
| 0.0865513 | -0.0275154 | 0.2601745 | 0.0825569 |
| 0.0978517 | -0.0283413 | 0.2889307 | 0.0827985 |
| 0.1102992 | -0.0291474 | 0.3193316 | 0.0826744 |
| 0.1239562 | -0.0299393 | 0.3513499 | 0.0822032 |
| 0.1388829 | -0.0307234 | 0.3849386 | 0.0813482 |
| 0.1551370 | -0.0315074 | 0.4200259 | 0.0800233 |
| 0.1727725 | -0.0322991 | 0.4565125 | 0.0781477 |
| 0.1918394 | -0.0331025 | 0.4942651 | 0.0756229 |
| 0.2123829 | -0.0339152 | 0.5331116 | 0.0723247 |
| 0.2344417 | -0.0347235 | 0.5728394 | 0.0681569 |
| 0.2580474 | -0.0355049 | 0.6132025 | 0.0631287 |
| 0.2832221 | -0.0362357 | 0.6539182 | 0.0573281 |
| 0.3099766 | -0.0368972 | 0.6946482 | 0.0507938 |

Table 3   (suite)

| Xint | Yint | Xext | Yext |
|---|---|---|---|
| 0.3383083 | -0.0374816 | 0.7350004 | 0.0435690 |
| 0.3681998 | -0.0379649 | 0.7745398 | 0.0357884 |
| 0.3996165 | -0.0382796 | 0.8127946 | 0.0276979 |
| 0.4325022 | -0.0383649 | 0.8492672 | 0.0197011 |
| 0.4667767 | -0.0381841 | 0.8834384 | 0.0123955 |
| 0.5023327 | -0.0377126 | 0.9147312 | 0.0064860 |
| 0.5390326 | -0.0369390 | 0.9424376 | 0.0025621 |
| 0.5767054 | -0.0358679 | 0.9656731 | 0.0007637 |
| 0.6151425 | -0.0345139 | 0.9834353 | 0.0005088 |
| 0.6540947 | -0.0329091 | 0.9947859 | 0.0008151 |
| 0.6932692 | -0.0311321 | 1.0000000 | 0.0010431 |
| 0.7323196 | -0.0291836 | | |
| 0.7708274 | -0.0267733 | | |
| 0.8083142 | -0.0236974 | | |
| 0.8442602 | -0.0200787 | | |
| 0.8780976 | -0.0161531 | | |
| 0.9092065 | -0.0121961 | | |
| 0.9369224 | -0.0085878 | | |
| 0.9605355 | -0.0058326 | | |
| 0.9792420 | -0.0041862 | | |
| 0.9921444 | -0.0033709 | | |
| 1.0000000 | -0.0029569 | | |

Table 4

| Xint | Yint | Xext | Yext |
|---|---|---|---|
| 0.0000000 | 0.0000000 | 0.0000000 | 0.0000000 |
| 0.0000656 | -0.0009004 | 0.0000016 | 0.0001426 |
| 0.0011314 | -0.0036988 | 0.0007888 | 0.0034530 |
| 0.0029421 | -0.0058379 | 0.0025796 | 0.0068517 |
| 0.0050023 | -0.0073408 | 0.0051253 | 0.0103370 |
| 0.0071395 | -0.0085006 | 0.0084148 | 0.0139345 |
| 0.0093364 | -0.0094521 | 0.0124940 | 0.0176285 |
| 0.0116161 | -0.0102832 | 0.0174176 | 0.0213995 |
| 0.0140252 | -0.0110537 | 0.0232490 | 0.0252183 |
| 0.0166240 | -0.0117954 | 0.0300607 | 0.0290365 |
| 0.0194778 | -0.0125281 | 0.0379237 | 0.0327993 |
| 0.0226540 | -0.0132669 | 0.0469026 | 0.0364537 |
| 0.0262203 | -0.0140242 | 0.0570566 | 0.0399515 |
| 0.0302455 | -0.0148104 | 0.0684342 | 0.0432730 |
| 0.0347990 | -0.0156331 | 0.0810813 | 0.0464143 |
| 0.0399501 | -0.0164972 | 0.0950506 | 0.0493488 |
| 0.0457690 | -0.0174046 | 0.1104005 | 0.0520111 |
| 0.0523257 | -0.0183523 | 0.1271886 | 0.0542966 |
| 0.0596909 | -0.0193319 | 0.1454615 | 0.0561184 |
| 0.0679348 | -0.0203300 | 0.1652498 | 0.0574947 |
| 0.0771266 | -0.0213328 | 0.1865819 | 0.0584813 |
| 0.0873340 | -0.0223288 | 0.2094865 | 0.0591270 |
| 0.0986234 | -0.0233115 | 0.2339881 | 0.0594972 |

Table 4 (suite)

| Xint | Yint | Xext | Yext |
|---|---|---|---|
| 0.1110588 | -0.0242762 | 0.2601057 | 0.0596635 |
| 0.1247032 | -0.0252196 | 0.2878491 | 0.0596755 |
| 0.1396165 | -0.0261397 | 0.3172160 | 0.0595416 |
| 0.1558565 | -0.0270353 | 0.3481885 | 0.0592329 |
| 0.1734772 | -0.0279045 | 0.3807300 | 0.0587007 |
| 0.1925287 | -0.0287407 | 0.4147829 | 0.0579156 |
| 0.2130560 | -0.0295309 | 0.4502663 | 0.0569007 |
| 0.2350979 | -0.0302558 | 0.4870723 | 0.0556787 |
| 0.2586855 | -0.0308981 | 0.5250582 | 0.0541710 |
| 0.2838397 | -0.0314516 | 0.5640407 | 0.0522197 |
| 0.3105712 | -0.0319197 | 0.6037951 | 0.0497093 |
| 0.3388773 | -0.0323063 | 0.6440558 | 0.0466139 |
| 0.3687409 | -0.0326053 | 0.6845104 | 0.0429448 |
| 0.4001273 | -0.0328018 | 0.7247946 | 0.0387182 |
| 0.4329814 | -0.0328779 | 0.7644886 | 0.0339633 |
| 0.4672250 | -0.0328110 | 0.8031139 | 0.0287322 |
| 0.5027526 | -0.0325552 | 0.8401384 | 0.0231434 |
| 0.5394277 | -0.0320299 | 0.8749838 | 0.0174261 |
| 0.5770785 | -0.0311589 | 0.9070294 | 0.0119231 |
| 0.6154959 | -0.0299273 | 0.9356153 | 0.0071082 |
| 0.6544303 | -0.0283770 | 0.9600000 | 0.0020000 |
| 0.6935871 | -0.0265450 | 0.9791919 | 0.0020000 |
| 0.7326199 | -0.0244346 | 0.9926438 | 0.0020000 |
| 0.7711270 | -0.0220246 | 1.0000000 | 0.0020000 |
| 0.8086463 | -0.0192760 | | |
| 0.8446529 | -0.0161505 | | |
| 0.8785621 | -0.0126752 | | |
| 0.9097404 | -0.0090236 | | |
| 0.9375173 | -0.0055546 | | |
| 0.9600000 | -0.0020000 | | |
| 0.9798900 | -0.0020000 | | |
| 0.9928896 | -0.0020000 | | |
| 1.0000000 | -0.0020000 | | |

Table 5

| Xint | Yint | Xext | Yext |
|---|---|---|---|
| 0.0000000 | 0.0000000 | 0.0000000 | 0.0000000 |
| 0.0000065 | -0.0003088 | 0.0000174 | 0.0005412 |
| 0.0004970 | -0.0023282 | 0.0005313 | 0.0034184 |
| 0.0016479 | -0.0043381 | 0.0017226 | 0.0063337 |
| 0.0033063 | -0.0060481 | 0.0035950 | 0.0093014 |
| 0.0052798 | -0.0074277 | 0.0061474 | 0.0123128 |
| 0.0074872 | -0.0085982 | 0.0093911 | 0.0153676 |
| 0.0099289 | -0.0096427 | 0.0133491 | 0.0184769 |
| 0.0126412 | -0.0106190 | 0.0180614 | 0.0216481 |
| 0.0156763 | -0.0115650 | 0.0235852 | 0.0248729 |
| 0.0190975 | -0.0124979 | 0.0299897 | 0.0281230 |
| 0.0229707 | -0.0134288 | 0.0373456 | 0.0313622 |

Table 5   (suite)

| Xint | Yint | Xext | Yext |
|---|---|---|---|
| 0.0273617 | -0.0143734 | 0.0457183 | 0.0345599 |
| 0.0323375 | -0.0153432 | 0.0551717 | 0.0376829 |
| 0.0379664 | -0.0163460 | 0.0657724 | 0.0406818 |
| 0.0443173 | -0.0173855 | 0.0775862 | 0.0434954 |
| 0.0514599 | -0.0184605 | 0.0906728 | 0.0460685 |
| 0.0594642 | -0.0195607 | 0.1050853 | 0.0483606 |
| 0.0684005 | -0.0206688 | 0.1208721 | 0.0503466 |
| 0.0783376 | -0.0217675 | 0.1380784 | 0.0520145 |
| 0.0893425 | -0.0228454 | 0.1567467 | 0.0533595 |
| 0.1014798 | -0.0238975 | 0.1769169 | 0.0543792 |
| 0.1148128 | -0.0249208 | 0.1986251 | 0.0550792 |
| 0.1294021 | -0.0259129 | 0.2219014 | 0.0554904 |
| 0.1453065 | -0.0268733 | 0.2467701 | 0.0556733 |
| 0.1625809 | -0.0278020 | 0.2732477 | 0.0556877 |
| 0.1812769 | -0.0286971 | 0.3013402 | 0.0555547 |
| 0.2014413 | -0.0295504 | 0.3310400 | 0.0552513 |
| 0.2231151 | -0.0303440 | 0.3623225 | 0.0547279 |
| 0.2463322 | -0.0310551 | 0.3951433 | 0.0539278 |
| 0.2711174 | -0.0316695 | 0.4294369 | 0.0528333 |
| 0.2974844 | -0.0321890 | 0.4651152 | 0.0515166 |
| 0.3254352 | -0.0326223 | 0.5020620 | 0.0500291 |
| 0.3549573 | -0.0329699 | 0.5401203 | 0.0482291 |
| 0.3860219 | -0.0332188 | 0.5790916 | 0.0459304 |
| 0.4185804 | -0.0333498 | 0.6187429 | 0.0431074 |
| 0.4525622 | -0.0333463 | 0.6588013 | 0.0398142 |
| 0.4878703 | -0.0331801 | 0.6989448 | 0.0360944 |
| 0.5243781 | -0.0327810 | 0.7388005 | 0.0320058 |
| 0.5619246 | -0.0320476 | 0.7779410 | 0.0276264 |
| 0.6003112 | -0.0309288 | 0.8158795 | 0.0230370 |
| 0.6393008 | -0.0294648 | 0.8520673 | 0.0183242 |
| 0.6786129 | -0.0277130 | 0.8858983 | 0.0136283 |
| 0.7179164 | -0.0256876 | 0.9167170 | 0.0091896 |
| 0.7568259 | -0.0233747 | 0.9438177 | 0.0053116 |
| 0.7948968 | -0.0207425 | 0.9664549 | 0.0027146 |
| 0.8316215 | -0.0177417 | 0.9837942 | 0.0020380 |
| 0.8664292 | -0.0143509 | 0.9948979 | 0.0020049 |
| 0.8986964 | -0.0106781 | 1.0000000 | 0.0020001 |
| 0.9277600 | -0.0070104 | | |
| 0.9529248 | -0.0038234 | | |
| 0.9734575 | -0.0022040 | | |
| 0.9884797 | -0.0019925 | | |
| 1.0000000 | -0.0020001 | | |

Table 6

| Xint | Yint | Xext | Yext |
|---|---|---|---|
| 0.0000000 | 0.0000000 | 0.0000000 | 0.0000000 |
| 0.0000682 | -0.0004000 | 0.0000101 | 0.0003255 |
| 0.0013444 | -0.0021640 | 0.0004974 | 0.0035496 |

Table 6   (suite)

| Xint | Yint | Xext | Yext |
|------|------|------|------|
| 0.0035193 | -0.0037558 | 0.0019864 | 0.0068826 |
| 0.0057969 | -0.0048451 | 0.0044593 | 0.0101699 |
| 0.0080611 | -0.0056936 | 0.0078262 | 0.0133715 |
| 0.0103320 | -0.0064091 | 0.0120386 | 0.0165006 |
| 0.0126599 | -0.0070501 | 0.0170918 | 0.0195820 |
| 0.0151052 | -0.0076512 | 0.0230157 | 0.0226236 |
| 0.0177343 | -0.0082310 | 0.0298640 | 0.0256048 |
| 0.0206152 | -0.0088006 | 0.0376965 | 0.0284954 |
| 0.0238162 | -0.0093701 | 0.0465686 | 0.0312744 |
| 0.0274062 | -0.0099492 | 0.0565372 | 0.0339203 |
| 0.0314543 | -0.0105436 | 0.0676625 | 0.0363970 |
| 0.0360300 | -0.0111574 | 0.0800043 | 0.0386600 |
| 0.0412030 | -0.0117934 | 0.0936186 | 0.0406729 |
| 0.0470427 | -0.0124527 | 0.1085572 | 0.0424119 |
| 0.0536188 | -0.0131335 | 0.1248694 | 0.0438669 |
| 0.0610007 | -0.0138301 | 0.1426020 | 0.0450371 |
| 0.0692577 | -0.0145340 | 0.1617999 | 0.0459257 |
| 0.0784579 | -0.0152383 | 0.1825047 | 0.0465361 |
| 0.0886683 | -0.0159392 | 0.2047531 | 0.0468822 |
| 0.0999546 | -0.0166371 | 0.2285762 | 0.0470047 |
| 0.1123811 | -0.0173329 | 0.2539980 | 0.0469662 |
| 0.1260106 | -0.0180269 | 0.2810332 | 0.0468137 |
| 0.1409033 | -0.0187200 | 0.3096850 | 0.0465535 |
| 0.1571170 | -0.0194131 | 0.3399418 | 0.0461893 |
| 0.1747060 | -0.0201069 | 0.3717755 | 0.0457734 |
| 0.1937205 | -0.0207965 | 0.4051349 | 0.0451158 |
| 0.2142058 | -0.0214689 | 0.4399478 | 0.0442293 |
| 0.2362007 | -0.0221016 | 0.4761182 | 0.0431907 |
| 0.2597368 | -0.0226733 | 0.5135188 | 0.0420016 |
| 0.2848355 | -0.0231761 | 0.5519823 | 0.0404955 |
| 0.3115073 | -0.0236161 | 0.5913019 | 0.0385374 |
| 0.3397502 | -0.0240011 | 0.6312329 | 0.0361299 |
| 0.3695473 | -0.0243301 | 0.6714869 | 0.0333073 |
| 0.4008643 | -0.0245927 | 0.7117246 | 0.0301003 |
| 0.4336468 | -0.0247734 | 0.7515550 | 0.0265630 |
| 0.4678170 | -0.0248489 | 0.7905307 | 0.0227668 |
| 0.5032708 | -0.0247776 | 0.8281437 | 0.0187848 |
| 0.5398730 | -0.0244948 | 0.8638236 | 0.0147058 |
| 0.5774540 | -0.0239375 | 0.8969434 | 0.0106834 |
| 0.6158064 | -0.0230982 | 0.9268227 | 0.0069570 |
| 0.6546825 | -0.0220233 | 0.9526327 | 0.0031402 |
| 0.6937890 | -0.0207456 | 0.9737920 | 0.0020000 |
| 0.7327815 | -0.0192589 | 0.9893243 | 0.0020000 |
| 0.7712608 | -0.0175379 | 0.9982207 | 0.0020000 |
| 0.8087683 | -0.0155377 | 1.0000000 | 0.0020000 |
| 0.8447826 | -0.0132062 | | |
| 0.8787209 | -0.0105405 | | |
| 0.9099464 | -0.0076751 | | |
| 0.9377702 | -0.0048343 | | |
| 0.9600000 | -0.0020000 | | |

Table 6   (suite)

| Xint | Yint | Xext | Yext |
|------|------|------|------|
| 0.9802624 | -0.0020000 | | |
| 0.9932809 | -0.0020000 | | |
| 1.0000000 | -0.0020000 | | |

Table 7

| Xint | Yint | Xext | Yext |
|------|------|------|------|
| 0.0000000 | 0.0000000 | 0.0000000 | 0.0000000 |
| 0.0000039 | -0.0002717 | 0.0000297 | 0.0008630 |
| 0.0005567 | -0.0033773 | 0.0007668 | 0.0044707 |
| 0.0018596 | -0.0059335 | 0.0024327 | 0.0082926 |
| 0.0035929 | -0.0079518 | 0.0049406 | 0.0122900 |
| 0.0055256 | -0.0095580 | 0.0082638 | 0.0164614 |
| 0.0075610 | -0.0108846 | 0.0124328 | 0.0207978 |
| 0.0096878 | -0.0120262 | 0.0175095 | 0.0252724 |
| 0.0119362 | -0.0130440 | 0.0235681 | 0.0298421 |
| 0.0143540 | -0.0139807 | 0.0306876 | 0.0344497 |
| 0.0169975 | -0.0148687 | 0.0389461 | 0.0390251 |
| 0.0199282 | -0.0157320 | 0.0484169 | 0.0434917 |
| 0.0232105 | -0.0165895 | 0.0591637 | 0.0477770 |
| 0.0269109 | -0.0174574 | 0.0712386 | 0.0518254 |
| 0.0310971 | -0.0183468 | 0.0846848 | 0.0556027 |
| 0.0358383 | -0.0192633 | 0.0995435 | 0.0590830 |
| 0.0412047 | -0.0202090 | 0.1158582 | 0.0622299 |
| 0.0472658 | -0.0211839 | 0.1336727 | 0.0649899 |
| 0.0540919 | -0.0221849 | 0.1530273 | 0.0673041 |
| 0.0617526 | -0.0232069 | 0.1739544 | 0.0691288 |
| 0.0703172 | -0.0242440 | 0.1964792 | 0.0704434 |
| 0.0798537 | -0.0252907 | 0.2206207 | 0.0712398 |
| 0.0904291 | -0.0263444 | 0.2463918 | 0.0715101 |
| 0.1021090 | -0.0274048 | 0.2737965 | 0.0712564 |
| 0.1149571 | -0.0284739 | 0.3028290 | 0.0705038 |
| 0.1290354 | -0.0295552 | 0.3334714 | 0.0692831 |
| 0.1444033 | -0.0306529 | 0.3656894 | 0.0676017 |
| 0.1611174 | -0.0317700 | 0.3994277 | 0.0654384 |
| 0.1792308 | -0.0329072 | 0.4346063 | 0.0627563 |
| 0.1987921 | -0.0340610 | 0.4711177 | 0.0595183 |
| 0.2198446 | -0.0352229 | 0.5088250 | 0.0557033 |
| 0.2424250 | -0.0363808 | 0.5475596 | 0.0513219 |
| 0.2665614 | -0.0375208 | 0.5871195 | 0.0464273 |
| 0.2922725 | -0.0386289 | 0.6272674 | 0.0411129 |
| 0.3195652 | -0.0396905 | 0.6677238 | 0.0355038 |
| 0.3484326 | -0.0406864 | 0.7081639 | 0.0297508 |
| 0.3788523 | -0.0415899 | 0.7482107 | 0.0240269 |
| 0.4107831 | -0.0423658 | 0.7874312 | 0.0185229 |
| 0.4441625 | -0.0429684 | 0.8253295 | 0.0134350 |
| 0.4789029 | -0.0433360 | 0.8613409 | 0.0089499 |
| 0.5148879 | -0.0433888 | 0.8948292 | 0.0052395 |
| 0.5519680 | -0.0430402 | 0.9250708 | 0.0022748 |

Table 7   (suite)

| Xint | Yint | Xext | Yext |
|------|------|------|------|
| 0.5899562 | -0.0422203 | 0.9599635 | -0.0011348 |
| 0.6286253 | -0.0408875 | 0.9836177 | 0.0007215 |
| 0.6677034 | -0.0390138 | 0.9948411 | 0.0016037 |
| 0.7068691 | -0.0365552 | 1.0000000 | 0.0020022 |
| 0.7457439 | -0.0334409 | | |
| 0.7838918 | -0.0296217 | | |
| 0.8208269 | -0.0251658 | | |
| 0.8560259 | -0.0203202 | | |
| 0.8889307 | -0.0154776 | | |
| 0.9189308 | -0.0110628 | | |
| 0.9453259 | -0.0073064 | | |
| 0.9792565 | -0.0036252 | | |
| 0.9921480 | -0.0025950 | | |
| 1.0000000 | -0.0020022 | | |

**Revendications**

**1.** Profil de pale pour voilure tournante d'aéronef, comportant, entre un bord d'attaque (1A) et un bord de fuite (1B), un extrados (2) et un intrados (3) dont le lieu géométrique des points équidistants de ceux-ci définit la cambrure (c), **caractérisé en ce que** la valeur du rapport de la valeur de la cambrure maximale à l'épaisseur maximale évolue linéairement avec l'épaisseur relative maximale du profil (1) et est comprise entre 0,13 et 0,19 pour une épaisseur relative de 7% de la corde (C) et est comprise entre 0,18 et 0,24 pour une épaisseur relative de 15% de la corde (C).

**2.** Profil de pale selon la revendication 1, **caractérisé en ce que** la loi d'évolution du rapport de la valeur de la cambrure maximale à l'épaisseur maximale en fonction de l'épaisseur relative maximale est représentée par la formule :

$$\frac{(c/C)_{max}}{(e/C)_{max}} = a_3 + b_3\ (e/C)_{max}$$

où e = épaisseur, c = cambrure, C = corde, les valeurs des coefficients $a_3$ et $b_3$ étant égales a :

$$a_3 = 0{,}1177$$

$$b_3 = 0{,}6114.$$

**3.** Profil de pale selon la revendication 1 ou la revendication 2, **caractérisé en ce que** la position de 1a cambrure maximale évolue linéairement avec l'épaisseur relative du profil (1) et est comprise entre 14% et 16% de la corde (C) pour une épaisseur relative de 7% et entre 27% et 29% de la corde (C) pour une épaisseur relative de 15%.

**4.** Profil de pale selon la revendication 3, **caractérisé en ce que** la loi d'évolution de la position de la cambrure maximale ($Xc_{max}$) est représentée par la formule :

$$\frac{Xc_{max}}{C} = a_2 + b_2\ (e/C)_{max}$$

les valeurs des coefficients $a_2$ et $b_2$ étant égales à :

**17**

$$a_2 = 0,0321$$

$$b_2 = 1,6499.$$

5. Profil de pale selon l'une quelconque des revendications 1 à 4, **caractérisé en ce que** le rapport entre les épaisseurs à 20% de la corde (C) et l'épaisseur maximale varie linéairement avec l'épaisseur relative et est compris entre 0,957 et 0,966 pour une épaisseur relative de 7% et compris entre 0,938 et 0,947 pour une épaisseur relative de 15%.

6. Profil de pale selon la revendication 5, **caractérisé en ce que** la loi d'évolution de ce rapport est représentée par la formule :

$$\frac{(e/C)\,(X/C)_{=20\%}}{(e/C)_{max}} = a_1 + b_1\,(e/C)_{max}$$

où X=position le long de la corde, les valeurs des coefficients $a_1$ et $b_1$ étant égales à :

$$a_1 = 0,9779$$

$$b_1 = -0,2305.$$

7. Profil de pale selon l'une quelconque des revendications 1 à 6, **caractérisé par** une position d'épaisseur relative maximale comprise entre 31% et 35% de la corde (C).

8. Pale pour voilure tournante d'aéronef, **caractérisée en ce qu'**elle présente des profils définis selon l'une quelconque des revendications 1 à 7.

**Claims**

1. Blade profile for rotorcraft rotors comprising, between a leading edge (1A) and a trailing edge (1B), an extrados (2) and an intrados (3) the camber (c)of which is defined by the geometrical locus of points equidistant from them, **characterised in that** the ratio of the maximum camber to the maximum thickness varies in a linear fashion with the maximum relative thickness of the profile (1) and is in the range 0.13 to 0.19 for a relative thickness of 7% of the chord (C) and is in the range 0.18 to 0.24 for a relative thickness of 15% of the chord (C).

2. Blade profile according to claim 1, **characterised in that** the law of evolution of the ratio of the maximum camber to the maximum thickness as a function of the maximum relative thickness is represented by the equation:

$$\frac{(c/C)_{max}}{(e/C)_{max}} = a_3 + b_3\,(e/C)_{max}$$

where e = thickness, c = camber and C = chord, the values of the coefficients $a_3$ and $b_3$ being as follows:

$$a_3 = 0.1177,$$

$$b_3 = 0.6114.$$

3. Blade profile according to claim 1 or claim 2,

**characterised in that** the position of the maximum camber evolves in a linear fashion with the relative thickness of the profile (1) and is in the range 14% to 16% of the chord (C) for a relative thickness of 7% and in the range 27% to 29% of the chord (C) for a relative thickness of 15%.

4. Blade profile according to claim 3,
   **characterised in that** the law of evolution of the position of the maximum camber $Xc_{max}$ is represented by the equation:

$$\frac{Xc_{max}}{C} = a_2 + b_2 \, (e/C)_{max}$$

the values of the coefficients $a_2$ and $b_2$ being as follows:

$$a_2 = 0.0321,$$

$$b_2 = 1.6499.$$

5. Blade profile according to any of claims 1 to 4,
   **characterised in that** the ratio between the thicknesses at 20% of the chord (C) and the maximum thickness varies in a linear fashion with the relative thickness and is in the range 0.957 to 0.966 for a relative thickness of 7% and in the range 0.938 to 0.947 for a relative thickness of 15%.

6. Blade profile according to claim 5,
   **characterised in that** the law of evolution of this ratio is represented by the equation:

$$\frac{(e/C)(X/C)_{=20\%}}{(e/C)_{max}} = a_1 + b_1 \, (e/C)_{max}$$

where X = position along the chord, the values of the coefficients $a_1$ and $b_1$ being as follows:

$$a_1 = 0.9779,$$

$$b_1 = -0.2305.$$

7. Blade profile according to any of claims 1 to 6,
   **characterised by** a maximum relative thickness position in the range 31% to 35% of the chord (C).

8. Blade for rotorcraft rotor,
   **characterised in that** it has profiles as defined in any one of claims 1 to 7.

**Patentansprüche**

1. Drehflügelblattprofil für Luftfahrzeug, umfassend zwischen einer Vorderkante (1A) und einer Hinterkante (1B) eine Oberseite (2) und eine Unterseite (3), wobei der geometrische Ort der Punkte, die abstandsgleich zu den letztgenannten sind, die Wölbung (c) definiert, **dadurch gekennzeichnet, dass** sich der Wert des Verhältnisses zwischen dem Wert der maximalen Wölbung und der maximalen Dicke linear mit der maximalen relativen Dicke des Profils (1) verändert, wobei er bei einer relativen Dicke von 7% der Sehne (C) zwischen 0,13 und 0,19 beträgt und bei einer relativen Dicke von 15% der Sehne (C) zwischen 0,18 und 0,24 beträgt.

2. Blattprofil nach Anspruch 1, **dadurch gekennzeichnet, dass** die Verlaufskurve des Verhältnisses zwischen dem Wert der maximalen Wölbung und der maximalen Dicke in Abhängigkeit von der maximalen relativen Dicke durch

die Formel

$$\frac{(c/C)_{max}}{(e/C)_{max}} = a_3 + b_3(e/C)_{max}$$

dargestellt wird, wobei gilt: e = Dicke, c = Wölbung, C = Sehne, und wobei die Werte der Koeffizienten $a_3$ und $b_3$ folgende sind:

$$a_3 = 0,1177$$

$$b_3 = 0,6114.$$

3. Blattprofil nach Anspruch 1 oder 2, **dadurch gekennzeichnet, dass** sich die Position der maximalen Wölbung linear mit der relativen Dicke des Profils (1) verändert, wobei sie bei einer relativen Dicke von 7% zwischen 14% und 16% der Sehne (C) und bei einer relativen Dicke von 15% zwischen 27% und 29% der Sehne (C) liegt.

4. Blattprofil nach Anspruch 3, **dadurch gekennzeichnet, dass** die Verlaufskurve der Position der maximalen Wölbung ($Xc_{max}$) durch die Formel

$$\frac{Xc_{max}}{C} = a_2 + b_2\,(e/C)_{max}$$

dargestellt wird, wobei die Werte der Koeffizienten $a_2$ und $b_2$ folgende sind:

$$a_2 = 0,0321$$

$$b_2 = 1,6499.$$

5. Blattprofil nach einem der Ansprüche 1 bis 4, **dadurch gekennzeichnet, dass** sich das Verhältnis zwischen den Dicken bei 20% der Sehne (C) und der maximalen Dicke linear mit der relativen Dicke verändert, wobei es bei einer relativen Dicke von 7% zwischen 0,957 und 0,966 und bei einer relativen Dicke von 15% zwischen 0,938 und 0,947 beträgt.

6. Blattprofil nach Anspruch 5, **dadurch gekennzeichnet, dass** die Verlaufskurve dieses Verhältnisses durch die Formel

$$\frac{(e/C)\,(X/C)_{=20\%}}{(e/C)_{max}} = a_1 + b_1\,(e/C)_{max}$$

dargestellt wird, wobei X die Position entlang der Sehne ist und wobei die Werte der Koeffizienten $a_1$ und $b_1$ folgende sind:

$$a_1 = 0,9779$$

$$b_1 = -0,2305.$$

7. Blattprofil nach einem der Ansprüche 1 bis 6, **gekennzeichnet durch** eine Position der maximalen relativen Dicke zwischen 31% und 35% der Sehne (C).

8. Drehflügelblatt für Luftfahrzeug, **dadurch gekennzeichnet, dass** es Profile aufweist, die nach einem der Ansprüche 1 bis 7 bestimmt sind.

Fig. 1

EP 0 991 569 B1

Fig. 2

EP 0 991 569 B1

Fig. 3

Fig. 4

EP 0 991 569 B1

Fig. 5

Fig. 6

EP 0 991 569 B1

Fig. 7

Fig. 8

Fig. 9

Fig. 10

Fig. 11

EP 0 991 569 B1

Fig. 12

$Kp_{min}$ (M = 0,4)

$Kp_{min}$ (M = 0,75)

Fig. 13

EP 0 991 569 B1